# EUROPEAN PATENT APPLICATION

(11) **EP 3 747 923 A1**
(43) Date of publication of application: **09.12.2020**
(21) Application number: 19178720.9
(22) Date of filing: 06.06.2019
(51) Int. Cl.: C08G 18/08, C08G 18/42, C08G 18/44, C08G 18/48, C08G 18/67, C08G 18/76, C08K 5/07

(54) **METHOD OF STORING AN ISOCYANATE-REACTIVE COMPONENT**

(71) Applicant: Covestro Deutschland AG, 51373 Leverkusen (DE)
(72) Inventor: The designation of the inventor has not yet been filed
(74) Representative: Levpat

(57) **Abstract**

The invention relates to a method of storing an isocyanate-reactive component for preparing a polyurethane composite, the stably stored isocyanate-reactive component obtained by the method, and the polyurethane composite prepared therefrom.

## Description

### Technical field

The invention relates to a method of storing an isocyanate-reactive component for preparing a polyurethane composite, the stably stored isocyanate-reactive component obtained by the method, and the polyurethane composite prepared therefrom.

### Background

In recent years, fiber reinforced polyurethane composites have gradually gained recognition in the industry. A fiber reinforced polyurethane composite is composed of two or more different physical phases, wherein the fibers are dispersed in a continuous polyurethane resin matrix phase. Fiber reinforced polyurethane composites are characterized in their light weight, corrosion resistance, high toughness and high application efficiency when compared to conventional or non-fiber reinforced polyurethane materials.

However, since the usual polyurethane reaction systems are sensitive to moisture, the moisture contained in the system tends to cause foaming. The industry has attempted to prevent or reduce the foaming of polyurethane reaction systems in a variety of ways. At present, there are mainly two measures, one of which is to increase the reaction speed of a polyurethane reaction system, but this is not suitable for a mold opening process requiring a relatively long operation time such as a winding process or a hand lay-up process. The second one is to add molecular sieve or zeolite into a polyurethane polyol composition to reduce the moisture contained in the polyurethane reaction system, thereby reducing foaming. Although the addition of molecular sieve or zeolite can reduce the foaming phenomenon, the reactivity of the polyurethane reaction system becomes stronger and stronger with the passage of time, and the reaction is accelerated, which seriously affects the operability of the polyurethane reaction system.

CN 102781989 A discloses a method of minimizing a catalytic effect of an iron contaminant present in an isocyanate composition that is reacted with a polyol to form a polyurethane, said method comprising the steps of: providing the isocyanate composition comprising polymeric methylene diphenyl diisocyanate and the iron contaminant; and combining a β-dicarbonyl and the isocyanate composition to associate the β-dicarbonyl with the iron contaminant. The β-dicarbonyl is further defined as 2,4-pentanedione, and its content disclosed in the examples is 0.02%. The purpose of this application is to associate the iron contaminant with the beta-dicarbonyl in the isocyanate composition comprising polymeric methylene diphenyl diisocyanate (PMDI). The association of the iron contaminant with the β-dicarbonyl is believed to minimize the catalytic effect of the iron contaminant when the isocyanate composition reacts with the polyol to form a polyurethane.

CN 104640898 B discloses a two-component polyurethane adhesive having high strength and elasticity as well as a particularly low glass transition temperature, suitable as a structural adhesive. The adhesive contains a diol, a polyamine, a polyisocyanate and a polyurethane polymer having isocyanate groups in certain ratios, and a Fe(III) or Ti(IV) or Zr(IV) or Hf(IV) chelate-complex-catalyst.

Despite the above disclosures, there is an urgent need in the industry for an improved storage method that can effectively prevent the foaming of polyurethane reaction systems while ensuring that their reactivity does not change greatly.

### Summary of the invention

In one aspect of the present invention, there is provided a method of storing an isocyanate-reactive component for preparing a polyurethane composite. The isocyanate-reactive component comprises:
B1) an organic polyol having a functionality of from 1.7 to 6 and a hydroxyl number of from 28 to 2000 mg KOH/g, preferably from 28 to 1100 mg KOH/g;
B2) from 0.5 to 20 wt%, preferably from 1 to 10 wt%, based on the total weight of the isocyanate-reactive component, of at least one molecular sieve;
wherein in the method B3) from 0.2 to 5 wt%, preferably from 0.2 to 2 wt%, based on the total weight of the isocyanate-reactive component, of at least one pentanedion, preferably 2,4-pentanedione, is added to the isocyanate-reactive component.

Preferably, the isocyanate-reactive component further comprises B4) one or more compounds having the structure of formula (I) 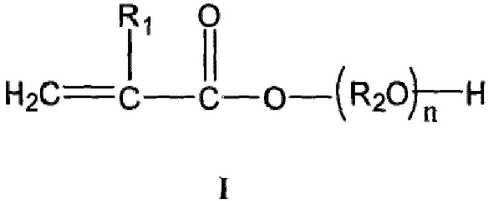 wherein R1 is selected from hydrogen, methyl or ethyl; R2 is selected from an alkylene having 2 to 6 carbon atoms, 2,2-di(4-phenylene)-propane, 1,4-di(methylene)-benzene, 1,3-di(methylene)-benzene, 1,2-di(methylene)-benzene; n is an integer selected from 1 to 6; and component C, a radical initiator.

Preferably, B4) has a content of from 10 to 65 wt%, based on the total weight of the isocyanate-reactive component.

Preferably, the isocyanate-reactive component further comprises the following components: a filler, an internal mold release agent, a flame retardant, a smoke suppressant, a dye, a pigment, an antistatic agent, an antioxidant, a UV stabilizer, a diluent, a defoamer, a coupling agent, a surface wetting agent, a leveling agent, a water removing agent, a catalyst, a thixotropic agent, a plasticizer, a foaming agent, a foam stabilizer, a foam homogenizing agent, or a combination thereof.

Through repeated experiments, it has been unexpectedly found that the method of the present invention ensures that the reactivity of a polyurethane reaction system is substantially unchanged, while solving the problem of its water sensitivity very well. Specifically, the presence of the isocyanate-reactive component containing pentanedion and its corresponding components according to the present invention allows the moisture of the polyurethane reaction system to be effectively reduced, so that foaming is greatly decreased and the reactivity of the reaction system is maintained.

In another aspect of the present invention, there is provided a stably storable isocyanate-reactive component for preparing a polyurethane composite, the isocyanate-reactive component comprising the following components:
B1) an organic polyol having a functionality of from 1.7 to 6 and a hydroxyl number of from 28 to 2000 mg KOH/g, preferably from 28 to 1100 mg KOH/g;
B2) from 0.5 to 20 wt%, preferably from 1 to 10 wt%, based on the total weight of the isocyanate-reactive component, of at least one molecular sieve;
B3) from 0.2 to 5 wt%, preferably from 0.2 to 2 wt%, based on the total weight of the isocyanate-reactive component, of at least one pentanedione, preferably 2,4-pentanedione.

Preferably, the isocyanate-reactive component further comprises B4) one or more compounds having the structure of formula (I) 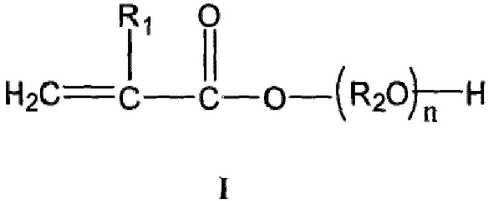 wherein R1 is selected from hydrogen, methyl or ethyl; R2 is selected from an alkylene having 2 to 6 carbon atoms, 2,2-di(4-phenylene)-propane, 1,4-di(methylene)-benzene, 1,3-di(methylene)-benzene, 1,2-di(methylene)-benzene; n is an integer selected from 1 to 6; and component C, a radical initiator.

Preferably, B4) has a content of from 10 to 65 wt%, based on the total weight of the isocyanate-reactive component.

Preferably, the isocyanate-reactive component further comprises: a filler, an internal mold release agent, a flame retardant, a smoke suppressant, a dye, a pigment, an antistatic agent, an antioxidant, a UV stabilizer, a diluent, a defoamer, a coupling agent, a surface wetting agent, a leveling agent, a water removing agent, a catalyst, molecular sieve, a thixotropic agent, a plasticizer, a foaming agent, a foam stabilizer, a foam homogenizing agent, or a combination thereof.

The isocyanate-reactive component of the present invention can achieve excellently stable storage while effectively reducing and controlling the moisture.

In still another aspect of the present invention, there is provided a method of preparing a polyurethane composite obtained by reacting a polyurethane reaction system comprising the following components (the following component B is the isocyanate-reactive component):
component A, one or more polyisocyanates;
component B, comprising:
   B1) an organic polyol having a functionality of from 1.7 to 6 and a hydroxyl number of from 28 to 2000 mg KOH/g, preferably from 28 to 1100 mg KOH/g;
   B2) from 0.5 to 20 wt%, preferably from 1 to 10 wt%, based on the total weight of the isocyanate-reactive component, of at least one molecular sieve;
   B3) from 0.2 to 5 wt%, preferably from 0.2 to 2 wt%, based on the total weight of the isocyanate-reactive component, of at least one pentanedione, preferably 2,4-pentanedione.

Preferably, the polyurethane composite is prepared by a pultrusion forming process, a winding forming process, a hand lay-up forming process, an spray forming process, or a combination thereof, preferably by a pultrusion forming process or a winding forming process.

Preferably, the component B further comprises B4) one or more compounds having the structure of formula (I) 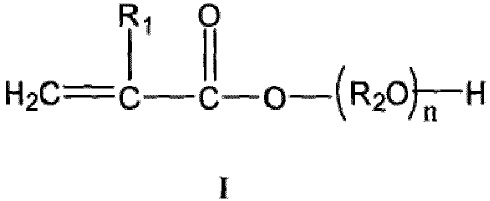 wherein R1 is selected from hydrogen, methyl or ethyl; R2 is selected from an alkylene having 2 to 6 carbon atoms, 2,2-di(4-phenylene)-propane, 1,4-di(methylene)-benzene, 1,3-di(methylene)-benzene, 1,2-di(methylene)-benzene; n is an integer selected from 1 to 6; and component C, a radical initiator.

Preferably, B4) has a content of from 4.6 to 33 wt%, based on the total weight of the polyurethane reaction system.

In still another aspect of the present invention, there is provided a polyurethane composite obtained from a polyurethane reaction system comprising the following components (the following component B is the isocyanate-reactive component):
component A, comprising one or more polyisocyanates;
component B, comprising the following components:
   B1) an organic polyol having a functionality of from 1.7 to 6 and a hydroxyl number of from 28 to 2000 mg KOH/g, preferably from 28 to 1100 mg KOH/g;
   B2) from 0.5 to 20 wt%, preferably from 1 to 10 wt%, based on the total weight of the isocyanate-reactive component, of at least one molecular sieve;
   B3) from 0.2 to 5 wt%, preferably from 0.2 to 2 wt%, based on the total weight of the isocyanate-reactive component, of at least one pentanedione, preferably 2,4-pentanedione.

Preferably, the component B further comprises B4) one or more compounds having the structure of formula (I) 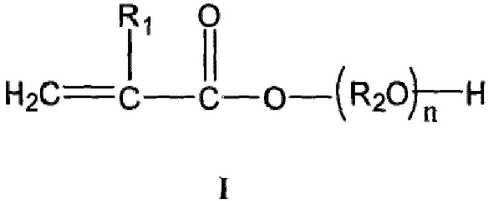 wherein R1 is selected from hydrogen, methyl or ethyl; R2 is selected from an alkylene having 2 to 6 carbon atoms, 2,2-di(4-phenylene)-propane, 1,4-di(methylene)-benzene, 1,3-di(methylene)-benzene, 1,2-di(methylene)-benzene; n is an integer selected from 1 to 6; and component C, a radical initiator.

Preferably, B4) has a content of from 4.6 to 33 wt%, based on the total weight of the polyurethane reaction system.

Preferably, the isocyanate is selected from the group consisting of: toluene diisocyanate, diphenylmethane diisocyanate, polyphenylmethane polyisocyanate, 1,5-naphthalene diisocyanate, hexamethylene diisocyanate, methylcyclohexyl diisocyanate, 4,4'-dicyclohexylmethane diisocyanate, isophorone diisocyanate, p-phenylene diisocyanate, p-xylylene diisocyanate, tetramethyldimethylene diisocyanate and their multimers, prepolymers, or a combination thereof.

Preferably, the polyurethane reaction system has a gel time of from 10 to 90 minutes, preferably from 15 to 70 minutes, more preferably from 18 to 65 minutes at room temperature.

Preferably, the polyurethane composite is prepared by a pultrusion forming process, a winding forming process, a hand lay-up forming process, an spray forming process, or a combination thereof, preferably by a pultrusion forming process or a winding forming process.

Preferably, the polyurethane reaction system further comprises from 5 to 95 wt%, preferably from 30 to 85 wt%, further preferably from 50 to 80 wt%, based on the total weight of the polyurethane composite, of a reinforcing material.

Preferably, the reinforcing material is selected from the group consisting of a fiber reinforced material, carbon nanotubes, hard particles, or a combination thereof, preferably a fiber reinforced material.

Optionally, the fiber reinforced material is selected from the group consisting of glass fiber, carbon fiber, polyester fiber, natural fiber, aramid fiber, nylon fiber, basalt fiber, boron fiber, silicon carbide fiber, asbestos fiber, whisker, metal fiber, or a combination thereof.

In still another aspect of the present invention, there is provided a polyurethane product comprising the aforementioned polyurethane composite of the present invention.

Preferably, the polyurethane product is selected from the group consisting of a polyurethane pipe box, a bridge frame, an anti-glare plate, a door and window/curtain wall profile, a solar panel frame, a fishplate, a sleeper, a shelf, a tray, a ladder frame, an insulating rod, a tent pole, a breakwater, a container floor, a utility pole, a lantern pole and an SMC (Sheet molding compound) composite article.

### Detailed description

Specific embodiments for carrying out the invention are described below.

According to the first aspect of the present invention, there is provided a method of storing an isocyanate-reactive component for preparing a polyurethane composite, the isocyanate-reactive component comprising:
B1) an organic polyol having a functionality of from 1.7 to 6 and a hydroxyl number of from 28 to 2000 mg KOH/g, preferably from 28 to 1100 mg KOH/g;
B2) from 0.5 to 20 wt%, preferably from 1 to 10 wt%, based on the total weight of the isocyanate-reactive component, of at least one molecular sieve;
wherein in the method B3) from 0.2 to 5 wt%, preferably from 0.2 to 2 wt%, based on the total weight of the isocyanate-reactive component, of at least one pentanedion, preferably 2,4-pentanedione, is added to the isocyanate-reactive component.

In certain embodiments of the present invention, the isocyanate-reactive component preferably further comprises the following components: a filler, an internal mold release agent, a flame retardant, a smoke suppressant, a dye, a pigment, an antistatic agent, an antioxidant, a UV stabilizer, a diluent, a defoamer, a coupling agent, a surface wetting agent, a leveling agent, a water removing agent, a catalyst, a thixotropic agent, a plasticizer, a foaming agent, a foam stabilizer, a foam homogenizing agent, or a combination thereof.

Through repeated experiments, it has been unexpectedly found that the method of the present invention ensures the stable reactivity of a polyurethane reaction system while solving the problem of its water sensitivity very well. The presence of the isocyanate-reactive component containing pentanedion and its corresponding components according to the present invention allows the moisture of the polyurethane reaction system to be effectively reduced, so that the foaming and the problems such as density reduction and performance degradation of polyurethane composites caused by the foaming are greatly decreased and the reactivity of the reaction system is maintained.

According to another aspect of the present invention, there is provided a stably storable isocyanate-reactive component for preparing a polyurethane composite, the isocyanate-reactive component comprising the following components:
B1) an organic polyol having a functionality of from 1.7 to 6 and a hydroxyl number of from 28 to 2000 mg KOH/g, preferably from 28 to 1100 mg KOH/g;
B2) from 0.5 to 20 wt%, preferably from 1 to 10 wt%, based on the total weight of the isocyanate-reactive component, of at least one molecular sieve;
B3) from 0.2 to 5 wt%, preferably from 0.2 to 2 wt%, based on the total weight of the isocyanate-reactive component, of at least one pentanedione, preferably 2,4-pentanedione.

Preferably, the isocyanate-reactive component further comprises: a filler, an internal mold release agent, a flame retardant, a smoke suppressant, a dye, a pigment, an antistatic agent, an antioxidant, a UV stabilizer, a diluent, a defoamer, a coupling agent, a surface wetting agent, a leveling agent, a water removing agent, a catalyst, molecular sieve, a thixotropic agent, a plasticizer, a foaming agent, a foam stabilizer, a foam homogenizing agent, or a combination thereof.

The isocyanate-reactive component of the present invention can achieve excellently stable storage while effectively reducing and controlling the moisture.

According to still another aspect of the present invention, there is provided a method of preparing a polyurethane composite obtained by reacting a polyurethane reaction system comprising the following components:
component A, one or more polyisocyanates;
component B, comprising:
   B1) an organic polyol having a functionality of from 1.7 to 6 and a hydroxyl number of from 28 to 2000 mg KOH/g, preferably from 28 to 1100 mg KOH/g;
   B2) from 0.5 to 20 wt%, preferably from 1 to 10 wt%, based on the total weight of the isocyanate-reactive component, of at least one molecular sieve;
   B3) from 0.2 to 5 wt%, preferably from 0.2 to 2 wt%, based on the total weight of the isocyanate-reactive component, of at least one pentanedione, preferably 2,4-pentanedione.

Preferably, the polyurethane composite is prepared by a pultrusion forming process, a winding forming process, a hand lay-up forming process, an spray forming process, or a combination thereof, preferably by a pultrusion forming process or a winding forming process.

Preferably, the polyurethane reaction system further comprises B4) one or more compounds having the structure of formula (I) 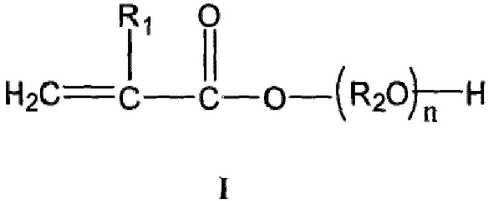 wherein R1 is selected from hydrogen, methyl or ethyl; R2 is selected from an alkylene having 2 to 6 carbon atoms, 2,2-di(4-phenylene)-propane, 1,4-di(methylene)-benzene, 1,3-di(methylene)-benzene, 1,2-di(methylene)-benzene; n is an integer selected from 1 to 6; and component C, a radical initiator.

Preferably, B4) has a content of from 4.6 to 33 wt%, based on the total weight of the polyurethane reaction system.

In still another aspect of the present invention, there is provided a polyurethane composite obtained from a polyurethane reaction system comprising the following components (the following component B is the isocyanate-reactive component):
component A, comprising one or more polyisocyanates;
component B, comprising the following components:
   B1) an organic polyol having a functionality of from 1.7 to 6 and a hydroxyl number of from 28 to 2000 mg KOH/g, preferably from 28 to 1100 mg KOH/g;
   B2) from 0.5 to 20 wt%, preferably from 1 to 10 wt%, based on the total weight of the isocyanate-reactive component, of at least one molecular sieve;
   B3) from 0.2 to 5 wt%, preferably from 0.2 to 2 wt%, based on the total weight of the isocyanate-reactive component, of at least one pentanedione, preferably 2,4-pentanedione.

Preferably, the isocyanate is selected from the group consisting of: toluene diisocyanate, diphenylmethane diisocyanate, polyphenylmethane polyisocyanate, 1,5-naphthalene diisocyanate, hexamethylene diisocyanate, methylcyclohexyl diisocyanate, 4,4'-dicyclohexylmethane diisocyanate, isophorone diisocyanate, p-phenylene diisocyanate, p-xylylene diisocyanate, tetramethyldimethylene diisocyanate and their multimers, prepolymers, or a combination thereof.

Preferably, the polyurethane reaction system has a gel time of from 10 to 90 minutes, preferably from 15 to 70 minutes, more preferably from 18 to 65 minutes at room temperature.

Preferably, the polyurethane composite is prepared by a pultrusion forming process, a winding forming process, a hand lay-up forming process, an spray forming process, or a combination thereof, preferably by a pultrusion forming process or a winding forming process.

Preferably, the polyurethane reaction system further comprises from 5 to 95 wt%, preferably from 30 to 85 wt%, further preferably from 50 to 80 wt%, based on the total weight of the polyurethane composite, of a reinforcing material.

When used in the present invention, the shape and size of the fiber reinforced material are not required, and it may be, for example, a continuous fiber, a fiber web formed by bonding, or a fiber fabric.

Preferably, the reinforcing material is selected from the group consisting of a fiber reinforced material, carbon nanotubes, hard particles, or a combination thereof, preferably a fiber reinforced material.

Optionally, the fiber reinforced material is selected from the group consisting of glass fiber, carbon fiber, polyester fiber, natural fiber, aramid fiber, nylon fiber, basalt fiber, boron fiber, silicon carbide fiber, asbestos fiber, whisker, metal fiber, or a combination thereof.

In still another aspect of the present invention, there is provided a polyurethane product comprising the aforementioned polyurethane composite of the present invention.

Preferably, the polyurethane product is selected from the group consisting of a polyurethane pipe box, a bridge frame, an anti-glare plate, a door and window/curtain wall profile, a solar panel frame, a fishplate, a sleeper, a shelf, a tray, a ladder frame, an insulating rod, a tent pole, a breakwater, a container floor, a utility pole, a lantern pole and an SMC (Sheet molding compound) composite article.

The polyisocyanate of the present invention may be an organic polyisocyanate which may be any aliphatic, alicyclic or aromatic isocyanate known for use in the preparation of a polyurethane composite. Examples thereof include, but are not limited to, toluene diisocyanate (TDI), diphenylmethane diisocyanate (MDI), polyphenylmethane polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylylene diisocyanate (XDI), tetramethyldimethylene diisocyanate (TMXDI) and their multimers, or a combination thereof. The isocyanate useful in the present invention preferably has a functionality of from 2.0 to 3.5, particularly preferably from 2.1 to 2.9. The isocyanate preferably has a viscosity of from 5 to 700 mPa·s, particularly preferably from 10 to 300 mPa·s, measured at 25 °C according to DIN 53019-1-3.

When used in the present invention, the organic polyisocyanate includes a isocyanate dimer, trimer, tetramer, pentamer, or a combination thereof.

In a preferred embodiment of the present invention, the isocyanate component A) is selected from the group consisting of diphenylmethane diisocyanate (MDI), polyphenylmethane polyisocyanate (pMDI) and their multimers, prepolymers, or a combination thereof.

A blocked isocyanate, which can be prepared by reacting an excess of organic polyisocyanates or their mixture with a polyol compound, can also be used as the isocyanate component A). These compounds and their preparation methods are well known to the skilled person in the art.

The polyurethane reaction system of the present invention comprises one or more organic polyols B1). The organic polyol has a content of from 21 to 60 wt%, based on the total weight of the polyurethane reaction system. The organic polyol may be an organic polyol commonly used in the art for preparing a polyurethane, including but not limited to: a polyether polyol, a polyether carbonate polyol, a polyester polyol, a polycarbonate diol, a polymer polyol, a polyol based on vegetable oil, or a combination thereof.

The polyether polyol can be prepared by a known process, for example, by reacting an alkylene oxide with a starter in the presence of a catalyst. The catalyst is preferably, but not limited to, an alkali hydroxide, a alkali alkoxide, antimony pentachloride, boron fluoride etherate, or a mixture thereof. The alkylene oxide is preferably, but not limited to, tetrahydrofuran, ethylene oxide, propylene oxide, 1,2-butylene oxide, 2,3-butylene oxide, styrene oxide, or a mixture thereof, particularly preferably ethylene oxide and/or propylene oxide. The starter is preferably, but not limited to, a polyhydroxy compound or a polyamine compound. The polyhydroxy compound is preferably, but not limited to, water, ethylene glycol, 1,2-propanediol, 1,3-propanediol, diethylene glycol , trimethylolpropane, glycerin, bisphenol A, bisphenol S, or a mixture thereof; and the polyamine compound is preferably, but not limited to, ethylenediamine, propylenediamine, butanediamine, hexamethylenediamine, diethylenetriamine, toluenediamine, or a mixture thereof.

The polyether carbonate polyol can also be used in the present invention, and prepared by addition of carbon dioxide and an alkylene oxide onto a starter comprising active hydrogen using a double metal cyanide catalyst.

The polyester polyol is prepared by reacting a dicarboxylic acid or a dicarboxylic anhydride with a polyol. The dicarboxylic acid is preferably, but not limited to, an aliphatic carboxylic acid having 2 to 12 carbon atoms, which is preferably, but not limited to, succinic acid, malonic acid, glutaric acid, adipic acid, suberic acid, azelaic acid, sebacic acid, dodecyl carboxylic acid, maleic acid, fumaric acid, phthalic acid, isophthalic acid, terephthalic acid, or a mixture thereof. The dicarboxylic anhydride is preferably, but not limited to, phthalic anhydride, tetrachlorophthalic anhydride, maleic anhydride, or a mixture thereof. The polyol reacting with a dicarboxylic acid or a dicarboxylic anhydride is preferably, but not limited to, ethylene glycol, diethylene glycol, 1,2-propylene glycol, 1,3-propylene glycol, dipropylene glycol, 1,3-methylpropanediol, 1,4-butanediol, 1,5-pentanediol, 1,6-hexanediol, neopentyl glycol, 1,10-decanediol, glycerol, trimethylolpropane, or a mixture thereof. The polyester polyol also includes that made of a lactone. The polyester polyol made of a lactone is preferably, but not limited to, ε-caprolactone. Preferably, the polyester polyol has a molecular weight of from 200 to 3,000 and a functionality of from 2 to 6, preferably from 2 to 4, and more preferably from 2 to 3.

The polycarbonate diol can be prepared by reacting a diol with a dialkyl or diaryl carbonate or phosgene. The diol is preferably, but not limited to, 1,2-propylene glycol, 1,3-propylene glycol, 1,4-butanediol, 1,5-pentanediol, 1,6-hexanediol, diethylene glycol, s-trioxane glycol, or a mixture thereof. The dialkyl or diaryl carbonate is preferably, but not limited to, diphenyl carbonate.

The polymer polyol can be a polymer-modified polyether polyol, preferably a grafted polyether polyol, a polyether polyol dispersion. The grafted polyether polyol is preferably that based on styrene and/or acrylonitrile, which may be prepared by in-situ polymerization of styrene, acrylonitrile, or a mixture of styrene and acrylonitrile in a ratio of from 90:10 to 10:90, preferably from 70:30 to 30:70. The polymer polyol useful in the present invention can also be a bio-based polyol such as castor oil or wood tar. The polymer polyether polyol dispersion comprises a dispersed phase, for example, an inorganic filler, a polyurea, a polyhydrazide, a polyurethane containing a tertiary amino group and/or melamine in a bonded form. The dispersed phase has a content of from 1 to 50 wt%, preferably from 1 to 45 wt%, based on the total weight of the polymer polyether polyol. Preferably, the polymer polyether polyol has a polymer solid content of from 20 to 45 wt%, based on the total weight of the polymer polyether, and a hydroxyl number of from 20 to 50 mg KOH/g.

When used in the present invention, the polyol based on vegetable oil includes vegetable oil, a vegetable oil polyol or a modified product thereof. Vegetable oil is a compound prepared from an unsaturated fatty acid and glycerol or that extracted from the fruits, seeds or germs of a plant, preferably but not limited to peanut oil, soybean oil, linseed oil, castor oil, rapeseed oil, palm oil. The vegetable oil polyol is a polyol starting from one or more vegetable oils. The starter for the synthesis of a vegetable oil polyol includes, but is not limited to, soybean oil, palm oil, peanut oil, canola oil, and castor oil. The starter of a vegetable oil polyol can introduced hydroxyl groups by a process such as cracking, oxidation or transesterification, and the corresponding vegetable oil polyol can be then prepared by a process for preparing an organic polyol well known to the skilled person in the art.

Methods of measuring the hydroxyl number are well known to the skilled person in the art and are disclosed, for example, in Houben Weyl, Methoden der Organischen Chemie, vol. XIV/2 Makromolekulare Stoffe, p. 17, Georg Thieme Verlag; Stuttgart 1963. The entire contents of this document are incorporated herein by reference.

When used in the present invention, the functionality and hydroxyl number of an organic polyol refer to the average functionality and average hydroxyl number, unless otherwise indicated.

Optionally, the polyurethane reaction system of the present invention further comprises one or more compounds B4) having the structure of formula (I) 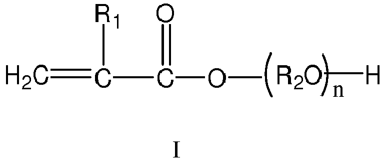 wherein R1 is selected from hydrogen, methyl or ethyl; R2 is selected from an alkylene having 2 to 6 carbon atoms; n is an integer selected from 1 to 6.

In a preferred embodiment of the present invention, R2 is selected from the group consisting of ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-di(4-phenylene)-propane, 1,4-dimethylenebenzene, 1,3-dimethylenebenzene, 1,2-dimethylenebenzene.

In a preferred embodiment of the present invention, the component B2) is selected from the group consisting of: hydroxyethyl methacrylate, hydroxypropyl methacrylate, hydroxybutyl methacrylate, hydroxyethyl acrylate, hydroxypropyl acrylate, hydroxybutyl acrylate, or a combination thereof.

The compound of formula (I) can be produced by a method commonly used in the art, for example, by esterification reaction of (meth)acrylic anhydride or (meth)acrylic acid, a (meth)acryloyl halide compound with HO-(R₂O)ₙ-H. The preparation method is well known to the skilled person in the art and described, for example, in "Handbook of Polyurethane Raw Materials and Auxiliary Agents" (Liu Yijun, published on April 1, 2005), Chapter 3; "Polyurethane Elastomer" (Liu Houzhen, published in August 2012), Chapter 2. The entire contents of these documents are incorporated herein by reference.

The polyurethane reaction system of the present invention further comprises C) a radical initiator. The radical initiator used in the present invention can be added to the polyol component or the isocyanate component or both components. The radical initiator to be used includes, but is not limited to, a peroxide, a persulfide, a peroxycarbonate, a peroxyboric acid, an azo compound, or any other suitable radical initiators which can initiate curing of a compound containing double bond. Examples thereof include tert-butyl peroxyisopropylcarbonate, tert-butyl peroxy-3,5,5-trimethylhexanoate, methyl ethyl ketone peroxide, and cumyl hydroperoxide. The radical initiator usually has a content of from 0.1 to 8 wt%, based on the total weight of the polyurethane reaction system of the present invention. In addition, an accelerator such as a cobalt compound or an amine compound may also be present.

Optionally, the polyurethane reaction system may further comprise a catalyst for catalyzing the reaction of isocyanate groups (NCO) with hydroxyl groups (OH). The catalyst suitable for a polyurethane reaction is preferably, but not limited to, an amine catalyst, an organometallic catalyst, or a mixture thereof. The amine catalyst is preferably, but not limited to, triethylamine, tributylamine, triethylenediamine, N-ethylmorpholine, N,N,N',N'-tetramethyl-ethylenediamine, pentamethyldiethylene-triamine, N,N-methylaniline, N,N-dimethylaniline, or a mixture thereof. The organometallic catalyst is preferably, but not limited to, an organotin compound such as tin (II) acetate, tin (II) octoate, tin ethylhexanoate, tin laurate, dibutyltin oxide, dibutyltin dichloride, dibutyltin diacetate, dibutyltin maleate, dioctyltin diacetate, or a mixture thereof. The catalyst is used in an amount of from 0.001 to 10 wt%, based on the total weight of the polyurethane reaction system of the present invention.

In an embodiment of the present invention, in the addition polymerization of isocyanate groups with hydroxyl groups, the isocyanate groups may be those contained in the organic polyisocyanate (component A), or those contained in the intermediate product of the reaction of the organic polyisocyanate (component A) with the organic polyol (component B1)) or the component B2); and the hydroxyl groups may be those contained in the organic polyol (component B1)) or the component B2), or those contained in the intermediate product of the reaction of the organic polyisocyanate (component A) with the organic polyol (component B1)) or the component B2).

In an embodiment of the present invention, the radical polymerization is the addition polymerization of ethylenic bonds, wherein the ethylenic bonds may be those contained in the component B2), or those contained in the intermediate product of the reaction of the component B2) with the organic polyisocyanate.

In an embodiment of the present invention, the polyurethane addition polymerization (i.e., the addition polymerization of isocyanate groups with hydroxyl groups) is simultaneously present with the radical polymerization. It is well known to the skilled person in the art that suitable reaction conditions can be selected such that the polyurethane addition polymerization and the radical polymerization are carried out successively, but the resultant polyurethane matrix is different from that prepared by carrying out the polyurethane addition polymerization and the radical polymerization simultaneously, so that the mechanical properties and processability of the prepared polyurethane composites are different.

Optionally, the polyurethane reaction system may further comprise an auxiliary agent or an additive, including but not limited to: a filler, an internal mold release agent, a flame retardant, a smoke suppressant, a dye, a pigment, an antistatic agent, an antioxidant, a UV stabilizer, a diluent, a defoamer, a coupling agent, a surface wetting agent, a leveling agent, a water removing agent, a catalyst, molecular sieve, a thixotropic agent, a plasticizer, a foaming agent, a foam stabilizer, a foam homogenizing agent, a radical reaction inhibitor, or a combination thereof, which may optionally be contained in the isocyanate component A) and/or the polyurethane reaction system B) of the present invention. These components can also be stored separately as component D), which is firstly mixed with the isocyanate component A) and/or the polyurethane reaction system B) of the present invention and then used in the preparation of a polyurethane composite.

In some embodiments of the present invention, the filler is selected from the group consisting of: aluminum hydroxide, bentonite, fly ash, wollastonite, perlite powder, floating beads, calcium carbonate, talc, mica powder, china clay, fumed silica , expandable microspheres, diatomaceous earth, volcanic ash, barium sulfate, calcium sulfate, glass microspheres, stone powder, wood powder, wood chips, bamboo powder, bamboo chips, rice grains, straw chips, sorghum stalk chips, graphite powder, metal powder, thermoset composite recycled powder, plastic granules or powder, or a combination thereof. The glass microspheres may be solid or hollow.

The internal mold release agent which can be used in the present invention includes any conventional mold release agent for producing a polyurethane, and examples thereof include a long-chain carboxylic acid, especially a fatty acid such as stearic acid, an amine of a long-chain carboxylic acid such as stearic amide, a fatty acid ester, a metal salt of a long-chain carboxylic acid, such as zinc stearate, or a polysiloxane.

Examples of the flame retardant which can be used in the present invention include triaryl phosphate, trialkyl phosphate, halogenated triaryl phosphate or trialkyl phosphate, melamine, melamine resin, halogenated paraffin, red phosphorus, or a composition thereof.

Other auxiliary agents which can be used in the present invention include a water removing agent such as molecular sieve; a defoamer such as polydimethylsiloxane; a coupling agent such as monooxirane or organoamine functionalized trialkoxysilanes or a composition thereof. The coupling agent is particularly preferably used to increase the adhesion of the resin matrix to the fiber reinforced material. A fine particulate filler, such as clay and fumed silica, is often used as the thixotropic agent.

The radical reaction inhibitor which can be used in the present invention includes a polymerization inhibitor, a polymerization retarder and the like, such as some phenols, quinones or hindered amine compounds, and examples thereof include methyl hydroquinone, p-methoxyphenol, benzoquinone, polymethyl acridine derivatives, low-valent copper ions, and the like.

All technical and scientific terms used herein have the same meaning as commonly understood by the skilled person in the art to which the present invention belongs, unless otherwise defined. When the definition of a term in the present description conflicts with the meaning as commonly understood by the skilled person in the art to which the present invention belongs, the definition described herein shall apply.

The invention is exemplified by the following examples, but it should be understood that the scope of the invention is not limited by these examples.

### Examples

### Test indication of performance parameters in the examples of the present application:

Functionality refers to the value determined according to the conventional formula: functionality = hydroxyl number * molecular weight / 56100; wherein the molecular weight is determined by GPC high performance liquid chromatography.

Isocyanate index refers to the value calculated by the following formula: isocyanate index (%) = (moles of isocyanate groups (NCO groups) in component A / moles of isocyanate-reactive groups in component B) * 100%.

NCO content refers to the content of NCO groups in a system, measured according to GB/T 12009.4-2016.

Gel time refers to the time from the start of mixing components A and B of a reaction system until the viscosity reaches a certain value (for example, about 10000 mPa·s). The gel time within the present invention is the time tested using a gel tester. In a specific test method, components A and B are uniformly mixed and then placed in the gel tester, and the time from pressing the start button until the gel tester stops working is recorded, which is the gel time within the present invention.

### Raw materials and their description

**Table 1 - List of raw materials**

| Name of raw material/device | Specification/brand | Supplier |
|---|---|---|
| Isocyanate | DESMODUR 70WF36 | Covestro Polymers (China) Co., Ltd. |
| 1# Polyol composition | Baydur 38BD001 | Covestro Polymers (China) Co., Ltd. |
| 2# Polyol composition | 100 parts by weight of Baydur 38BD001 + 0.3 parts by weight of 2,4-pentanedione | Covestro Polymers (China) Co., Ltd. |
| Molecular sieve | 3A Molecular sieve | Shanghai Hengye Molecular Sieve Co., Ltd. |
| 2,4-Pentanedione | Analytical purity | Shanghai Lingfeng Chemical Reagent Co., Ltd. |
| Mixer | Speedmixer DAC 400.1 FVZ | HAUSCHILD, Germany |
| Gel time tester | GTS-THP | Shanghai Senyu Scientific Instrument Co., Ltd. |
| Remarks: | Baydur 38BD001 contains 7.3 wt% of 3A Molecular sieve. | |

### Example 1:

The temperature of the materials such as the polyol and 2,4-pentanedione was controlled at 23±2 °C, and meanwhile the laboratory temperature and humidity were recorded. The gel tester was powered on and used by referring to its operating instruction.

100 g of the freshly prepared 1# polyol composition was poured into the special mixer cup 1 and 0.3 g of 2,4-pentanedione was added. The mixture was mixed with the mixer at 2000 rpm for 60 seconds to obtain the 2# polyol composition. 60 g of the 2# polyol composition and 46.2 g of the isocyanate were poured into the special mixer cup 2, and mixed with the mixer at 2000 rpm for 60 seconds. Then 100±5 g of the mixed material was poured into the special aluminum foil cup for the gel time tester. The gel time on the first day was measured to be 33 minutes.

After the 2# polyol composition as above prepared was stored at room temperature of 23±2 °C for 7 days, it was stirred and mixed with the isocyanate following the above process and the gel time was measured to be 30 minutes. The gel time was shortened by only 3 minutes when compared with the first day, indicating a stable storage.

### Comparative Example 1

The temperature of the materials such as the polyol was controlled at 23±2 °C, and meanwhile the laboratory temperature and humidity were recorded. The gel tester was powered on and used by referring to its operating instruction.

60 g of the freshly prepared 1# polyol composition and 46.2 g of the isocyanate were separately poured into the special mixer cup 1, and mixed with the mixer at 2000 rpm for 60 seconds. 100±5 g of the mixed material was then poured into the special aluminum foil cup for the gel time tester. The gel time was measured to be 35 minutes.

After the prepared 1# polyol composition was stored at room temperature of 23±2 °C for 7 days, it was mixed with the isocyanate and tested according to the above process for the gel time which was measured to be 10 minutes. The gel time was shortened by 25 minutes when compared with the first day, that is, the gel time was shortened greatly with the extension of the storage time, indicating an unstable storage.

It can be seen from the above example and comparative example that the gel time of the reaction system to which pentanedion is added is not changed greatly, and its reactivity is stable, so that a stable storage can be achieved. In contrast, the gel time of the reaction system to which no pentanedion is added is changed greatly with the extension of the storage time, so that a stable storage cannot be achieved.

In spite of the foregoing detailed description of the present invention for the purposes of the present invention, it is to be understood that this detailed description is exemplary in nature. Without departing from the spirit and scope of the present invention, various changes can be made by the skilled person in the art in addition to the contents defined by the claims.

## Claims

1. A method of storing an isocyanate-reactive component for preparing a polyurethane composite, the isocyanate-reactive component comprising:
B1) an organic polyol having a functionality of from 1.7 to 6 and a hydroxyl number of from 28 to 2000 mg KOH/g, preferably from 28 to 1100 mg KOH/g;
B2) from 0.5 to 20 wt%, preferably from 1 to 10 wt%, based on the total weight of the isocyanate-reactive component, of at least one molecular sieve;
wherein in the method B3) from 0.2 to 5 wt%, preferably from 0.2 to 2 wt%, based on the total weight of the isocyanate-reactive component, of at least one pentanedion, preferably 2,4-pentanedione, is added to the isocyanate-reactive component.

2. The method according to claim 1, **characterized in that** the isocyanate-reactive component further comprises B4) one or more compounds having the structure of formula (I) 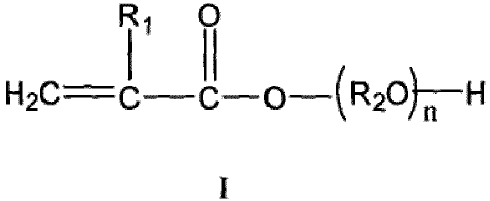 wherein R1 is selected from hydrogen, methyl or ethyl; R2 is selected from an alkylene having 2 to 6 carbon atoms, 2,2-di(4-phenylene)-propane, 1,4-di(methylene)-benzene, 1,3-di(methylene)-benzene, 1,2-di(methylene)-benzene; n is an integer selected from 1 to 6; and component C, a radical initiator.

3. The method according to claim 2, **characterized in that** B4) has a content of from 10 to 65 wt%, based on the total weight of the isocyanate-reactive component.

4. A stably storable isocyanate-reactive component for preparing a polyurethane composite, the isocyanate-reactive component comprising the following components:
B1) an organic polyol having a functionality of from 1.7 to 6 and a hydroxyl number of from 28 to 2000 mg KOH/g, preferably from 28 to 1100 mg KOH/g;
B2) from 0.5 to 20 wt%, preferably from 1 to 10 wt%, based on the total weight of the isocyanate-reactive component, of at least one molecular sieve;
B3) from 0.2 to 5 wt%, preferably from 0.2 to 2 wt%, based on the total weight of the isocyanate-reactive component, of at least one pentanedione, preferably 2,4-pentanedione.

5. The isocyanate-reactive component according to claim 4, **characterized in that** the isocyanate-reactive component further comprises B4) one or more compounds having the structure of formula (I) 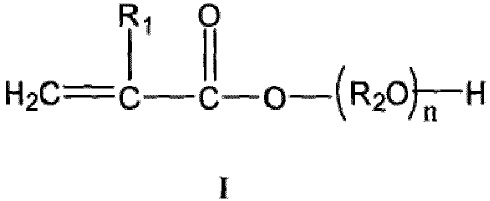 wherein R1 is selected from hydrogen, methyl or ethyl; R2 is selected from an alkylene having 2 to 6 carbon atoms, 2,2-di(4-phenylene)-propane, 1,4-di(methylene)-benzene, 1,3-di(methylene)-benzene, 1,2-di(methylene)-benzene; n is an integer selected from 1 to 6; and component C, a radical initiator.

6. The isocyanate-reactive component according to claim 5, **characterized in that** B4) has a content of from 10 to 65 wt%, based on the total weight of the isocyanate-reactive component.

7. A method of preparing a polyurethane composite obtained by reacting a polyurethane reaction system comprising the following components:
component A, one or more polyisocyanates;
component B, comprising:
B1) an organic polyol having a functionality of from 1.7 to 6 and a hydroxyl number of from 28 to 2000 mg KOH/g, preferably from 28 to 1100 mg KOH/g;
B2) from 0.5 to 20 wt%, preferably from 1 to 10 wt%, based on the total weight of component B, of at least one molecular sieve;
B3) from 0.2 to 5 wt%, preferably from 0.2 to 2 wt%, based on the total weight of component B, of at least one pentanedione, preferably 2,4-pentanedione.

8. The method of preparing a polyurethane composite according to claim 7, **characterized in that** the polyurethane composite is prepared by a pultrusion forming process, a winding forming process, a hand lay-up forming process, an spray forming process, or a combination thereof, preferably by a pultrusion forming process or a winding forming process.

9. A polyurethane composite obtained from a polyurethane reaction system comprising the following components:
component A, comprising one or more polyisocyanates;
component B, comprising the following components:
B1) an organic polyol having a functionality of from 1.7 to 6 and a hydroxyl number of from 28 to 2000 mg KOH/g, preferably from 28 to 1100 mg KOH/g;
B2) from 0.5 to 20 wt%, preferably from 1 to 10 wt%, based on the total weight of component B, of at least one molecular sieve;
B3) from 0.2 to 5 wt%, preferably from 0.2 to 2 wt%, based on the total weight of component B, of at least one pentanedione, preferably 2,4-pentanedione.

10. The polyurethane composite according to claim 9, **characterized in that** the component B further comprises B4) one or more compounds having the structure of formula (I) 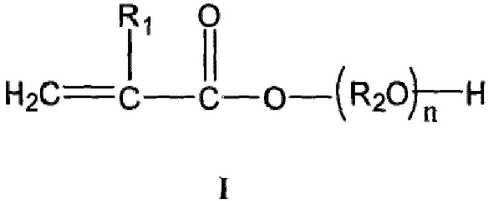 wherein R1 is selected from hydrogen, methyl or ethyl; R2 is selected from an alkylene having 2 to 6 carbon atoms, 2,2-di(4-phenylene)-propane, 1,4-di(methylene)-benzene, 1,3-di(methylene)-benzene, 1,2-di(methylene)-benzene; n is an integer selected from 1 to 6; and component C, a radical initiator.

11. The polyurethane composite according to claim 10, **characterized in that** B4) has a content of from 4.6 to 33 wt%, based on the total weight of the polyurethane reaction system.

12. The polyurethane composite according to any one of claims 9 to 11, **characterized in that** the isocyanate is selected from the group consisting of toluene diisocyanate, diphenylmethane diisocyanate, polyphenylmethane polyisocyanate, 1,5-naphthalene diisocyanate, hexamethylene diisocyanate, methylcyclohexyl diisocyanate, 4,4'-dicyclohexylmethane diisocyanate, isophorone diisocyanate, p-phenylene diisocyanate, p-xylylene diisocyanate, tetramethyldimethylene diisocyanate and their multimers, prepolymers, or a combination thereof.

13. The polyurethane composite according to any one of claims 9 to 11, **characterized in that** the polyurethane reaction system has a gel time of from 10 to 90 minutes, preferably from 15 to 70 minutes, more preferably from 18 to 65 minutes at room temperature.

14. The polyurethane composite according to any one of claims 9 to 11, **characterized in that** the polyurethane composite is prepared by a pultrusion forming process, a winding forming process, a hand lay-up forming process, an spray forming process, or a combination thereof, preferably by a pultrusion forming process or a winding forming process.

15. The polyurethane composite according to any one of claims 9 to 11, **characterized in that** the polyurethane reaction system further comprises from 5 to 95 wt%, preferably from 30 to 85 wt%, more preferably from 50 to 80 wt%, based on the total weight of the polyurethane composite, of a reinforcing material.

16. The polyurethane composite according to claim 15, **characterized in that** the reinforcing material is selected from the group consisting of a fiber reinforced material, carbon nanotubes, hard particles, or a combination thereof, preferably a fiber reinforced material.

17. The polyurethane composite according to claim 16, **characterized in that** the fiber reinforced material is selected from the group consisting of glass fiber, carbon fiber, polyester fiber, natural fiber, aramid fiber, nylon fiber, basalt fiber, boron fiber, silicon carbide fiber, asbestos fiber, whisker, metal fiber, or a combination thereof.

18. A polyurethane product comprising the polyurethane composite according to any one of claims 9 to 17.

19. The polyurethane product according to claim 18, **characterized in that** the polyurethane product is selected from the group consisting of a polyurethane pipe box, a bridge frame, an anti-glare plate, a door and window/curtain wall profile, a solar panel frame, a fishplate, a sleeper, a shelf, a tray, a ladder frame, an insulating rod, a tent pole, a breakwater, a container floor, a utility pole, a lantern pole and an SMC composite article.
